# EUROPÄISCHE PATENTSCHRIFT

(11) **EP 2 230 096 B1**
(45) Veröffentlichungstag und Bekanntmachung des Hinweises auf die Patenterteilung: **17.04.2013**
(21) Anmeldenummer: 10153299.2
(22) Anmeldetag: 11.02.2010
(51) Int. Cl.: B60B 17/00, F16D 65/12

(54) **Schienenfahrzeug mit Radschallabsorber**
Rail vehicle with wheel sound absorber
Véhicule sur rails doté d'un absorbeur phonique de roue

(30) Priorität: 16.03.2009 AT 4202009
(43) Veröffentlichungstag der Anmeldung: 22.09.2010
(73) Patentinhaber: Siemens AG Österreich, 1210 Wien (AT)
(72) Erfinder: Boronkai, Laszlo, 8054, Graz (AT); Schleinzer, Gerald, 8047, Graz (AT)
(74) Vertreter: Maier, Daniel Oliver

(56) Entgegenhaltungen:
- EP-A1- 0 548 700
- DE-A1- 19 617 684

## Beschreibung

### Technisches Gebiet

Die Erfindung betrifft Schienenfahrzeug mit Radschallabsorber.

### Stand der Technik

Schienenfahrzeuge geben im Betrieb, sowohl bei Geradeausfahrt als auch bei Kurvenfahrt beträchtliche Lärmpegel ab. Dabei können die durch die Räder der Schienenfahrzeuge abgestrahlten Schallpegel den größten Anteil des Gesamtschallpegels verursachen. Die in Schienenfahrzeugen eingesetzten Räder, üblicherweise Metallräder, eignen sich durch ihre ausgeprägten Eigenresonanzen im hörbaren Frequenzbereich besonders gut zur Schallabgabe. Die Eigendämpfung solcher Metallräder ist äußerst gering, sodaß der Effekt der Schallabgabe kaum gemindert wird. Die zur Schallabgabe erforderliche Anregung erfolgt durch den Kontakt des Rades zur metallischen Schiene.

Als Gegenmaßnahme zur Schallabgabe ist seit längerem das gezielte Dämpfen der Eigenresonanz der metallischen Schienenfahrzeugräder bekannt. Dabei werden grundsätzlich viskos-elastische Bauteile fest mit dem metallischen Rad verbunden, welche die Schwingungsenergie aufnehmen und in Wärme umwandeln. Eine Vielzahl an Ausführungsformen dieser sogenannten Radschallabsorber ist bekannt. Beispielsweise offenbart die gattungsgemässe DE 31 19 497 C2 einen Radschallabsorber in Scheibenform, in EP 0 872 358 A1 wird eine axiale Montage eines Radschallabsorbers in Form einer energieaufnehmenden Schicht empfohlen.

Eine weitere Lösung des Problems ist in DE69723779T2 dargestellt, welche ohne viskos-elastische Bauteile eine ähnliche Wirkung erzielen soll.

Andere Lösungen, welche den sogenannten Radreifen von der Radscheibe mittels viskos-elastischer Bauteile entkoppeln (z.B. EP 0 745 493 A1) werden nur mehr in Sonderfällen (Straßenbahnen) angewandt, da das Risikopotential einer solchen Lösung bei den hohen Geschwindigkeiten von Vollbahnen nicht akzeptabel ist.

Die Befestigung von Radschallabsorbern erfolgt mittels Schraubverbindungen oder geeigneter Nuten am Radkranz, wozu der Radkranz geeignet verstärkt ausgeführt werden muß, was die ungefederte Masse eines Fahrwerks und damit den Verschleiß erhöht. Weiters kann das sogenannte Verschleißgrenzmaß nicht zu kleineren Durchmessern geführt werden (im Vergleich zu Rädern ohne Radschallabsorber), wodurch sich eine geringere Laufleistung von Rädern mit Radschallabsorbern ergibt. Ebenso verringert sich die Festigkeit des Rades aufgrund der erforderlichen Befestigungsbohrungen für die Radschallabsorber.

Bei Triebzügen ist es weiters nachteilig, dass die Radsätze an Triebfahrwerken mit Radbremsscheiben andere Radsätze bedingen wie an den nichtangetriebenen Achsen.

### Darstellung der Erfindung

Der Erfindung liegt daher die Aufgabe zugrunde, ein Schienenfahrzeug anzugeben, welches an jeder Achse dieselben Radsätze aufweist.

Die Aufgabe wird durch ein Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein Schienenfahrzeug an allen Achsen mit baugleichen Radsätzen ausgestattet, wobei Radschallabsorber an diesen Rädern mittels der für Radbremsscheiben vorgesehenen Befestigungsmittel, insbesondere Befestigungsbohrungen lösbar angebracht sind.

Damit ist der Vorteil erzielbar, dass für ein Schienenfahrzeug, bzw. einen Triebzug nur ein Radsatz zu entwickeln, herzustellen und als Ersatzteil vorzuhalten ist. Damit kann eine deutliche Reduktion der Herstellungs- und Wartungskosten erreicht werden.

Gegenständliche Erfindung bewirkt den vorteilhaften Effekt, denselben Radsatz, welcher an Achsen mit Radbremsscheiben eingesetzt wird auch an allen anderen Achsen einsetzen zu können. Dazu werden Radschallabsorber an den für Befestigung von Radbremsscheiben vorgesehenen Befestigungsmitteln (üblicherweise Bohrungen in der Radscheibe) lösbar angebracht.

Dazu werden Radschallabsorber eingesetzt, welche aus einem Schichtaufbau von viskos-elastischen Material und Metall bestehen und welche geeignete Befestigungsmittel zur Anbringung an den für Radbremsscheiben vorgesehenen Bohrungen der Radscheibe aufweisen.

Die Erfindung ist nicht auf Radschallabsorber aus einem Schichtaufbau von viskos-elastischen Material und Metall eingeschränkt, es eignen sich alle Ausführungsformen von Radschallabsorbern, welche für die Montage an den für Radbremsscheiben vorgesehenen Befestigungsmitteln adaptierbar sind.

An Achsen mit Radbremsscheiben kann der Radschallabsorber entfallen, oder es kann ein Radschallabsorber eingesetzt werden, welcher zur gemeinsamen Befestigung mit der Radbremsscheibe an den für Radbremsscheiben vorgesehenen Bohrungen geeignet ausgebildet ist.

Die Schienenfahrzeugräder sind mit einer geeigneten Paßfläche (Flansch) auszustatten, welche vorteilhafterweise mittels mechanischer Bearbeitung des Schienenfahrzeugrades an geeigneter Stelle und mit geeigneten Toleranzen und Oberflächengüten erfolgt. Dadurch kann ein möglichst unwuchtsfreier Lauf des Schienenfahrzeugrads mit Radschallabsorber erzielt werden.

### Kurzbeschreibung der Zeichnungen

Es zeigen beispielhaft:
**Fig.1** ein Schienenfahrzeugrad mit Befestigungsmitteln für eine Radbremsscheibe.
**Fig.2** ein Schienenfahrzeugrad mit an den für eine Radbremsscheibe vorgesehenen Befestigungsmitteln angebrachten Radschallabsorber.

### Ausführung der Erfindung

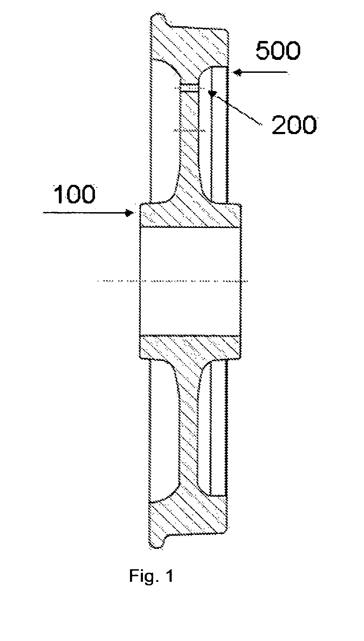

**Fig.1** zeigt beispielhaft und schematisch eine Schnittansicht durch ein Schienenfahrzeugrad mit Befestigungsmitteln für eine Radbremsscheibe. Ein einteiliges Schienenfahrzeugrad 100 weist mehrere, über den Umfang verteilte Befestigungsbohrungen 200 auf, welche für die Aufnahme einer Radbremsscheibenbefestigung (nicht dargestellt) vorgesehen sind. Der Flansch 500 des Schienenfahrzeugrads 100 ist an den Stellen mechanisch bearbeitet, welche mit einem Radschallabsorber in Kontakt stehen können um eine geeignete Zentrierfläche zu bilden.

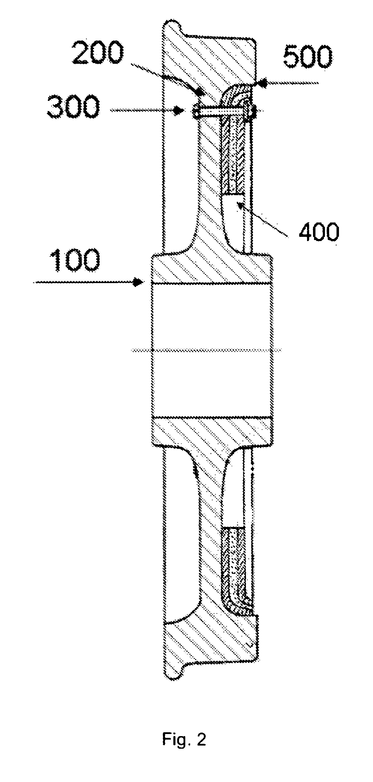

**Fig.2** zeigt das Schienenfahrzeugrad aus Fig.1 mit an den für eine Radbremsscheibe vorgesehenen Befestigungsmitteln angebrachtem Radschallabsorber. Ein Radschallabsorber 400 ist mittels einer Schraubverbindung 300 an den für eine Radbremsscheibe vorgesehenen Befestigungsbohrungen 200 lösbar befestigt. Der Flansch 500 bildet eine geeignete Zentrierfläche zur exakten Positionierung des Radschallabsorbers 400, sodaß möglichst geringe Unwuchten entstehen. Der in Fig.2 beispielhaft dargestellte Radschallabsorber 400 besteht aus einem 3-Schichtaufbau Metall-viskos-elastisches Material-Metall und ist als Kreisring ausgeführt. Alle anderen Bauformen von Radschallabsorbern können ebenfalls, so es ihre Befestigungsmöglichkeiten erlauben, angewandt werden.

### Liste der Bezeichnungen

- 100: Schienenfahrzeugrad
- 200: Befestigungsbohrung
- 300: Schraubverbindung
- 400: Radschallabsorber
- 500: Flansch

## Patentansprüche

1. Schienenfahrzeug mit Radschallabsorbern (400), **dadurch gekennzeichnet, dass** an allen Achsen Radsätze, umfassend einteilige Schienenfahrzeugräder (100) mit Befestigungsmitteln (200) für Radbremsscheiben vorgesehen sind und Radschallabsorber (400) an den für Radbremsscheiben vorgesehenen Befestigungsmitteln (200) lösbar angebracht sind.

2. Radschallabsorber (400) zum Einsatz in einem Schienenfahrzeug gemäß Anspruch 1, **dadurch gekennzeichnet, dass** der Radschallabsorber (400) zur Befestigung an den für Radbremsscheiben vorgesehenen Befestigungsmitteln (200) ausgebildet ist.

3. Schienenfahrzeugrad (100) zum Einsatz in einem Schienenfahrzeug gemäß Anspruch 1 **dadurch gekennzeichnet, dass** Befestigungsmitteln (200) für Radbremsscheiben vorgesehen sind und ein Flansch zur Aufnahme eines Radschallabsorbers (400) vorgesehen ist.

## Claims

1. Rail vehicle having wheel noise absorbers (400), **characterised in that** wheel sets including one-piece rail vehicle wheels (100) having fastening means (200) for wheel brake disks are provided on all axles and wheel noise absorbers (400) are detachably fixed to the fastening means (200) provided for wheel brake disks.

2. Wheel noise absorber (400) for use in a rail vehicle according to claim 1, **characterised in that** the wheel noise absorber (400) is embodied so as to fasten on the fastening means (200) provided for wheel brake disks.

3. Rail vehicle wheel (100) for use in a rail vehicle according to claim 1, **characterised in that** fastening means (200) are provided for wheel brake disks and a flange is provided to receive a wheel noise absorber (400).

## Revendications

1. Véhicule sur rails doté d'absorbeurs phoniques pour roues (400), **caractérisé en ce que** sont prévus, sur tous les essieux, des jeux de roues comprenant des roues monopièces (100) pour véhicule sur rails avec des moyens de fixation (200) pour disques de frein de roue et **en ce que** des absorbeurs phoniques pour roues (400) sont montés de manière détachable sur les moyens de fixation (200) prévus pour des disques de frein de roue.

2. Absorbeur phonique pour roues (400) destiné à être mis en oeuvre dans un véhicule sur rails selon la revendication 1, **caractérisé en ce que** l'absorbeur phonique pour roues (400) est conçu pour être fixé sur les moyens de fixation (200) prévus pour des disques de frein de roue.

3. Roue pour véhicule sur rails (100) destinée à être mis en oeuvre dans un véhicule sur rails selon la revendication 1, **caractérisé en ce que** sont prévus des moyens de fixation (200) pour disques de frein de roue et **en ce qu'**est prévu un flasque pour loger un absorbeur phonique pour roues (400).
